## Europäisches Patentamt
## European Patent Office
## Office européen des brevets

(19)

(11) Veröffentlichungsnummer: **0 127 056**
**B1**

(12) **EUROPÄISCHE PATENTSCHRIFT**

(45) Veröffentlichungstag der Patentschrift:
12.08.87

(21) Anmeldenummer: **84105473.7**

(22) Anmeldetag: **14.05.84**

(51) Int. Cl.⁴: **C 08 L 25/12 //**
**(C08L25/12, 71:02, C08K5:09)**

(54) **Thermoplastische Formmassen.**

(30) Priorität: **20.05.83 DE 3318452**

(43) Veröffentlichungstag der Anmeldung:
**05.12.84 Patentblatt 84/49**

(45) Bekanntmachung des Hinweises auf die Patenterteilung:
**12.08.87 Patentblatt 87/33**

(84) Benannte Vertragsstaaten:
**BE DE FR GB NL**

(56) Entgegenhaltungen:
**DE-A-2 061 216**
**DE-A-2 916 668**

(73) Patentinhaber: **BASF Aktiengesellschaft, Carl-Bosch- Strasse 38, D-6700 Ludwigshafen (DE)**

(72) Erfinder: **Hambrecht, Juergen, Dr., Werderstrasse 30, D-6900 Heidelberg (DE)**
Erfinder: **Lindenschmidt, Gerhard, Dr., Buchenweg 11, D-6906 Leimen (DE)**
Erfinder: **Jung, Rudolf H., Dr., Wachenheimer Strasse 6 D, D-6520 Worms 1 (DE)**
Erfinder: **Echte, Adolf, Dr., Leuschnerstrasse 42, D-6700 Ludwigshafen (DE)**
Erfinder: **Regel, Walter, Hillensheimer Strasse 27, D-6704 Mutterstadt (DE)**

EP 0 127 056 B1

## Beschreibung

Die Erfindung betrifft Styrol-Acrylnitril-Copolymerisate enthaltende thermoplastische Formmassen, die ein lineares Dreiblockcopolymeres X-Y-X, mit einem mittelständigen Polypropylenoxidblock und zwei endständigen Ethylenoxidblöcken X aufweisen.

Zum Stand der Technik nennen wir:

(1) DE-PS 20 61 216
(2) BE-PS 622 945
(3) US-PS 3 624 186
(4) DE-OS 29 16 668

In (1) und (2) wird der Einsatz von fettsauren Salzen, insbesondere der Salze der Stearinsäure, bei der Herstellung und Verarbeitung von thermoplestischen Polymeren beschrieben. Diese Salze sollen als Entformungsmittel, Antiblockmittel oder als Antiagglomerationsmittel dienen. Auch sollen sie eine Stabilisierung gegen Verfärbung beim Erwärmen von Styrol-Acrylnitril-Copolymerisaten bewirken und, wie in (1) beschrieben, in Kombination mit Organosiliciumverbindungen zur Schlagzähigkeitsverbesserung der thermoplastischen Formmassen beitragen. Die Fettsäuren werden dabei in Mengen von 0,1 bis 3 Gew.% eingesetzt.

Aus (3) ist bekannt, daß Stearate von Hydroxylendgruppen tragenden Polybutadienen das Verarbeitungsverhalten von Styrol-Acrylnitril-Copolymerisate enthaltenden thermoplastischen Formmassen verbessern. Insbesondere wird das Fließverhalten verbessert, ohne daß dabei ein Ausschwitzen der Hilfsstoffe in Kauf zu nehmen ist.

In dem Handbuch "Kunststoff-Additive" in R. Gächter und H. Müller, Hanser-Verlag, München (1979), wird ab Seite 229 über verschiedene Verarbeitungshilfsmittel für thermoplastische Formmassen berichtet. Dabei werden als Gleitmittel u.a. auch aliphatische Gleitmittel, wie Cetylalkohol und Stearylalkohol, genannt. Es hat sich jedoch gezeigt, daß diese Alkohole zum Ausschwitzen bei der Verarbeitung neigen und deshalb die Verarbeitungscyclen empfindlich stören.

Aus (4) ist die Verwendung von Ethylenoxid-/Propylenoxid-Dreiblockcopolymeren für die Verbesserung des Verarbeitungsverhaltens von Styrol-Acrylnitril-Copolymerisaten beschrieben, ohne daß dadurch die mechanischen Eigenschaften wesentlich vermindert werden. Insbesondere soll durch Zusatz der Ethylenoxid-/Propylenoxid-Dreiblockcopolymeren die Verarbeitungsbreite erweitert werden, was heißt, daß der Spritzdruck beim Spritzguß in weitem Rahmen variiert werden kann, ohne daß Formteile mit Fehlern erhalten werden. Bei den laufend steigenden Ansprüchen in der Spritzgußverarbeitung, insbesondere hinsichtlich der Verarbeitungsgeschwindigkeit und der geometrisch komplizierten Formteile, hat es sich jedoch gezeigt, daß neben der Verarbeitungsbreite auch die Entformungsbreite eine wesentliche Rolle spielt. So hat sich in der Praxis mehrfach ergeben, daß bei sehr komplizierten Formteilen, die als Folge ihrer geometrischen Form sehr fest auf dem Werkzeugkern sitzen können, diese Zusätze nicht ausreichen, um beim Abstreifen des Formteils vom Werkzeugkern eine schadensfreie Entformung zu erreichen.

Aufgabe der vorliegenden Erfindung war es deshalb, mit Styrol-Acrylnitril-Copolymerisaten enthaltenden thermoplastischen Formmassen verträgliche Hilfsstoffe zu suchen, die das Verarbeitungsverhalten dieser Formmassen, d.h. die Verarbeitungsbreite und das Entformungsverhalten wesentlich verbessern, ohne daß dadurch die mechanischen, optischen, chemischen und elektrischen Eigenschaften beeinträchtigt werden.

Diese Aufgabe wird erfindungsgemäß dadurch gelöst, daß den Styrol-Acrylnitril-Copolymerisate enthaltenden thermoplastischen Formmassen Hilfsstoffe gemäß Anspruch 1 der vorliegenden Erfindung hinzugegeben werden.

Aus den unter (1) bis (4) zitierten Schriften konnte der Fachmann nicht entnehmen, daß die beschriebenen Hilfsmittel, wie fettsaure Salze und Ethylenoxid-/Propylenoxid-Dreiblockcopolymere, geeignet sind, das Verarbeitungsverhalten in der gewünschten Weise positiv zu beeinflussen, d.h. das Entformungsverhalten bei der Form-Öffnung und bei Abstoßen der Formteile vom Kern zu verbessern ohne dabei andere Eigenschaften der Formmassen zu verschlechtern.

So ist aus (1) bekannt, fettsaure Metallseifen in Mengen von 0,1 bis 3 Gew.% und in Kombination mit Organosiliciumverbindungen zur Verbesserung der Schlagzähigkeit von ABS-Polymerisaten einzusetzen. Es wird in keiner Weise auf die Verbesserung des Vererbeitungsverhaltens im oben genannten Sinne eingegangen. Die verwendeten Mengen an fettsauren Salzen führen auch, wie in Vergleichsversuchen noch gezeigt werden wird, zu einer starken Gelbfärbung und teilweise auch zu Trübungen in gemäß (1) ausgerüsteten Styrol-Acrylnitrilcopolymerisaten. Die Lehre von (2) zeigt auf, daß mit fettsauren Metallsalzen in Mengen von 0,05 bis 0,075 Gew.% Styrol-Acrylnitril-Copolymerisate gegen Verfärbungen bei thermischer Belastung geschützt werden können. Verarbeitungsbedingungen und Eigenschaften werden nicht erwähnt. Wie in Vergleichsversuchen noch gezeigt werden wird, sind die in (2) angegebenen Mengen an fettsauren Salzen nicht geeignet, das Verarbeitungsverhalten wesentlich zu verbessern und auch die Eigenfarbe der Formmassen ist unbefriedigend. Bei längerem Stehen wird außerdem häufig eine Trübung der Formmassen beobachtet. Aus (3) kann entnommen werden, daß mit Hilfe der Stearate der OH-Endgruppen enthaltenden Polybutadiene das Fließverhalten von SAN-Copolymerisaten verbessert werden kann. Auf die Verarbeitungsbreite und das Entformungsverhalten wird nicht eingegangen, wohl aber gezeigt, daß mit Hilfe der polymeren Stearate ein Ausschwitzen des Hilfsmittels bei der Verarbeitung verhindert wird. Aus (4) ist schließlich bekannt, daß Ethylenoxid-Propylenoxid-Dreiblockcopolymere einer ganz bestimmten Zusammensetzung und Molekülgröße das Verarbeitungsverhalten, insbesondere die Verarbeitungsbreite von SAN-Copolymerisaten, verbessern. Es wird jedoch in der zitierten Schrift nicht auf das Entformungsverhalten, insbesondere auf das Abstoßen der Formteile vom Werkzeugkern, eingegangen.

Es war daher auch für den Fachmann überraschend, daß die erfindungsgemäß anzuwendende Kombination der Komponenten B + C eine Verbesserung der Verarbeitungsbreite und eine außergewöhnliche, aus der Wirkung der Einzelkomponenten nicht absehbare Verbesserung des Entformungsverhaltens erbringt, ohne daß dabei die mechanischen, optischen, chemischen und elektrischen Eigenschaften der SAN-Copolymerisate beeinträchtigt werden. Die Anwendung der erfindungsgemäßen Kombination der Komponenten B + C in den angegebenen Mengen hat zur Folge, daß völlig fehlerfreie, wasserklare und farblose Formteile erhalten werden, die optimale mechanische Eigenschaften aufweisen.

Die Erfindung betrifft demgemäß eine thermoplastische Formmasse, enthaltend

A mindestens ein Styrol-Acrylnitrilcopolymerisat,

sowie

B 0,1 bis 2 Gew.%, bezogen auf A + B + C, mindestens ein lineares Dreiblockcopolymerisat, das einen mittelständigen, aus Propylenoxideinheiten aufgebauten Block und außerdem an jedem der beiden Enden je einen, aus Ethylenoxideinheiten aufgebauten Block enthält, wobei, bezogen auf das Dreiblockcopolymerisat, der Anteil des mittelständigen Blocks 95 - 80 Gew.% und der Anteil der endständigen Blöcke 5 - 20 Gew.% beträgt. Die Formmasse ist dadurch gekennzeichnet, daß sie zusätzlich als Komponente C ein Salz einer Fettsäure in einem Anteil von 0,005 bis 0,1 Gew.%, bezogen auf A + B + C, enthält.

Gegenüber herkömmlichen, niedermoleкuleren inneren Schmiermitteln, wie niedermolekularen Fettalkoholen und Mineralölen, zeigt die erfindungsgemäß anzuwendende Kombinationen von Komponenten B +C den Vorteil, daß sie nicht ausschwitzen und verglichen mit Hilfsstoffen, die für die Erhöhung der Schlagzähigkeit, z. B. in (1) eingesetzt werden, in wesentlich geringeren Mengen anwendbar sind, so daß die optischen Eigenschaften nicht nachteilig beeinflußt werden. Gegenüber dem Einsatz der Komponente B, dem Dreiblockcopolymeren aus Ethylenoxid und Propylenoxid, alleine hat die erfindungsgemäße Kombination den Vorteil, daß nicht nur die Verarbeitungsbreite, sondern auch das Entformungsverhalten in allen Phasen des Entformungsvorganges in überraschender, außergewöhnlicher Weise verbessert wird (s. Tabelle).

Unter Verarbeitungsbreite ist der Druckbereich zu verstehen, in dem die Formteile keine Beanstandungen aufweisen. Der Bereich wird bei tiefem Spritzdruck durch den Spritzdruck begrenzt, bei dem die Formteile keine Einfallstellen mehr aufweisen. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist erwünscht, um bei Druckschwankungen oder Schwankungen der Materialeigenschaften (Inhomogenitäten) die Ausfallrate an Spritzgußformlingen möglichst niedrig halten zu können.

Unter dem Entformungsverhalten in den verschiedenen Phasen des Entformungsvorganges verstehen wir das Verhalten fer Formteile beim Abstreifen der Formteile vom Werkzeugkern. Ein Maß für das Verhalten der SAN-Copolymerisate in diespn Entformungsvorgängen ist die Entformungsbreite. Unter Entformungsbreite ist die Differenz zwischen dem Mindestfülldruck, d.h. dem Druck, bei dem das Formteil gerade ausgefüllt wird, und dem Nachdruck bpi dem beim Abstreifpn vom Werkzeugkern an 50 % der Formteile Schäden, wie Risse, auftreten, verstanden. Eine nähere Beschreibung der Versuchsdurchführung wird in den Beispielen gegeben.

Nachstehend wird der Aufbau der Komponenten der erfindungsgemäßen Formmasse, deren Herstellung und die Herstellung der Formmasse beschrieben.

Die Formmasse enthält im wesentlichen die Komponenten A, B und C, wobei die Komponente B 0,1 bis 2 Gew.%, vorzugsweise 0,3 bis 1,5 Gew.% und die Komponente C 0,005 bis 0,1 Gew.%, vorzugsweise 0,01 bis 0,07 Gew.%, jeweils bezogen auf A + B + C, ausmacht. Die Formmasse besteht vorzugsweise aus den Komponenten in den genannten Anteilen.

## Komponente A

Für die erfindungsgemäßen Formmassen werden insbesondere kautschukfreie Styrol-Acrylnitril-Copolymerisate angewendet; diese bestehen im wesentlichen aus Copolymerisaten, die 20 bis 35 Gew.% Acrylnitril und 80 bis 65 Gew.% Styrol und/oder alkylsubstituierte Styrole mit 1 bis 4 C-Atomen im Alkylrest enthalten. Der Styrolbestandteil wird, insbesondere um die Wärmeformbeständigkeit zu verbessern, ganz oder teilweise durch p-Methylstyrol oder -Methylstyrol ersetzt. Styrol-Acrylnitrilcopolymerisate sind im Handel erhältlich und können z. B. nach der Lehre der DE-AS 10 01 001 bzw. DE-PS 10 03 436 hergestellt werden. Der Molekulargewichtsbereich $M_w$ der Copolymerisate kann $0,8 \cdot 10^5$ bis $3,0 \cdot 10^5$ (Gewichtsmittel $\bar{M}_w$ aus Lichtstreuung) betragen.

## Komponente B

Als Komponente B der erfindungsgemäßen Formmassen kommen lineare Dreiblockcopolymerisate in Betracht. Es werden bevorzugt lineare Dreiblockcopolymerisate X-Y-X in Mengen von 0,1 bis 2,0 Gew.%, bevorzugt in Mengen 2a von 0,3 bis 1,5 Gew.%, bezogen auf die Komponenten A, B und C der Formmasse, angewendet (X = Ethylenoxid-, Y = Propylenoxid-block). In den Grenzen von 0,3 bis 1,5 Gew.% entfalten diese Bestandteile ihre volle Wirksamkeit in Bezug auf die Verarbeitungseigenschaften der Styrol-Acrylnitrilcopolymerisate und beeinträchtigen die Mechanik des Copolymeren nicht. Bei höheren Anteilen, beginnend ab etwa 1,5 Gew.%, nimmt die Verarbeitungsbreite ab; bei Mengen von unter 0,1 Gew.% nimmt ebenfalls die Verarbeitungsbreite ab. Dasselbe gilt in etwa, wenn das Molekulargewicht des mittelständigen Propylenoxidblockes Werte oberhalb von 3000 annimmt.

Die Herstellung der linearen Drpiblockcopolymerisate erfolgt in an sich bekannter Weise (vgl. N Schönfeldt, Grenzflächenaktive Ethylenoxid-Addukte, Wissenschaftliche Verlagsgesellschaft mbH, Stuttgart, 1976, S. 53) durch Polymerisation, wobei zunächst ein mittelständiger Polypropylenoxidblock Y mit dem Molekulargewichtsbereich (Zahlenmittel des mittleren Molekulargewichts) von 700 bis 3000, insbesondere von 900 bis 2000 hergestellt wird, an dessen beiden Enden bevorzugt je ein Block aus Ethylenoxid angelagert wird. Unter dem Molekulargewicht des Dreiblockes X-Y-X und der Blockbestandteile X und Y sollen die mittleren Molekulargewichte [Zahlenmittel $\bar{M}_n$ bestimmt z. B. aus der OH-Zahl (DIN 53 240)] verstanden werden.

Es ist bevorzugt, lineare Dreiblockcopolymerisate, die im wesentlichen oder vollständig aus Homopolymerisatblöcken aufgebaut sind, zu verwenden. Der Anteil der beiden endständigen aus Ethylenoxid aufgebauten Blockcopolymerisate X am Dreiblockcopolymerisat soll 5 bis 20 Gew.%, vorzugsweise 10 bis 15 Gew.% und der des mittelständigen Propylenoxidblocks Y 95 bis 80 Gew.%, vorzugsweise 90 bis 85 Gew.%, jeweils bezogen auf das Blockcopolymerisat X-Y-X, betragen.

Die mittleren Molekulargewichte (Zahlenmittel) der Summe der beiden endständigen Polyethylenoxidblöcke betragen 140 bis 1000, insbesondere 150 bis 800. Dazu trägt vorzugsweise jeder Block etwa die Hälfte bei.

Die mittleren Molekulargewichte des linearen Blockcopolymerisates setzen sich additiv aus denen der beiden Bestandteile zusammen und können somit im Bereich von 840 bis 4000, insbesondere von 900 bis 3600 liegen.

## Komponente C

Das erfindungsgemäß zu verwendende fettsaure Metallsalz basiert auf einer geradkettigen, gesättigten Fettsäure mit mindestens 12 C-Atomen. Beispielsweise seien genannt Laurin-, Palmitin-, Stearin- und/oder Behensäure. Als Metalle können Erdalkalimetalle wie Magnesium, Calcium, Strontium und Barium sowie Metalle der 2. Nebengruppe des Periodensystems wie Zink und Cadmium, Metalle der 3. Nebengruppe wie Aluminium, Metalle 5 der 4. Nebengruppe wie Zinn und Blei, verwendet werden. Besonders bevorzugt sind die Salze der Stearinsäure mit Zink, Calcium, Barium und Aluminium.

## Zusatzstoffe D

Gegebenenfalls können die erfindungsgemäßen Formmassen noch übliche Zusatzstoffe enthalten. Übliche Zusätze sind z. B. Hilfsmittel, wie langkettige Fettalkohole, Farbstoffe, Stabilisatoren, organische und anorganische Pigmente, Flammschutzmittel sowie Füllstoffe. Die Wirkung der Verarbeitungshilfsmittel ist von diesen Zusätzen unabhängig.

Die unter D genannten Zusatzstofff werden in, dem Fachmann bekannten, wirksamen Mengen angewendet; sie können zusammen mit den Komponenten B und C in die Komponente A der Formmasse eingearbeitet werden.

Die Einarbeitung der Bestandteile B, C und gegebenenfalls von D in die Copolymerisate A kann auf allen dem Fachmann bekannten Wegen durchgeführt werden. Insbesondere hat sich das Vermischen der Bestandteile A, B, C und D als geeignet erwiesen. Es ist aber auch möglich, jede der Komponenten B, C und D einzeln mit dem Copolymerisat A zu vermischen oder auf dessen Oberfläche aufzubringen. Als günstig hat sich auch die Polymerisation von A in Gegenwart der Komponenten B + C und die anschließende Zugabe der Stoffe D erwiesen.

Es ist noch darauf hinzuweisen, daß die erfindungsgemäß anzuwendende Kombination von B + C das Verarbeitungsverhalten von Styrol-Acrylnitrilcopolymerisaten verbessert, ohne den Meltindex, d.h. die Nullviskosität wesentlich zu verändern. Es ist bekannt, daß der Zusatz von Innenschmiermitteln im allgemeinen eine Erhöhung der Meltindices der zugrundeliegenden Polymerisate bewirkt. Dies ist überraschenderweise hier nicht der Fall.

Für die Durchführung der Versuche wurden folgende Ausgangsstoffe verwendet:

## Styrol-Acrylnitrilcopolymerisat (Komponente A)

A I: Acrylnitrilgehalt 25 Gew.%, mittleres Molekulargewicht,
$\bar{M}_w = 200\,000$
A II: Acrylnitrilgehalt 35 Gew.%, mittleres Molekulargewicht,
$\bar{M}_w = 150\,000$

## Dreiblockcopolymeres X-Y-X (Komponente B)

B I: Propylenoxidblock Y 90 Gew.%, Ethylenoxidblöcke X zusammen
10 Gew.%, mittleres Molekulargewicht, $\bar{M}_n = 1100$, mittleres Molgewicht des Y-Blocks 950
B II: Propylenoxidblock Y 90 Gew.%, Ethylenoxidblöcke X zusammen 10 Gew.%, mittleres Molekulargewicht,
$\bar{M}_n = 2000$, mittleres Molgewicht des Y-Blocks 1750
B III: Propylenoxidblock Y 70 Gew.%, Ethylenoxidblöcke X zusammen 30 Gew.%, mittleres
Molekulargewicht, $\bar{M}_n = 1700$, mittleres Molgewicht des Y-Blocks 1100

## Fettsaure Salze (Komponente C)

C I: Zinkstearat
C II: Aluminiumstearat
C III: Calciumstearat

## Zusatzstoffe (Komponente D)

D I: Octadecylalkohol
D II: Di-tert.-butyl-p-kresol
D III: Tetrabrombisphenol A
Die Erfindung wird anhand der nachstehenden Beispiele und Vergleichsversuche näher erläutert. Alle in den Beispielen genannten Teile und Prozente beziehen sich, wenn nichts anderes vermerkt ist, auf das Gewicht.

## Beispiele und Vergleichsversuche

Die Komponenten A, B, C und D werden in den in der Tabelle, Spalte 2, genannten Mengen auf einem Fluidmischer vorgemischt und anschließend in einem Extruder bei 240 bis 260°C abgemischt. Die Komponente C wurde in den Beispielen 3, 5 und 6 bis 14 nachträglich auf das Extrudergranulat in einer Mischtrommel in bekannter Weise aufgebracht. Im Beispiel 15 wurde die Komponente C dagegen zusammen mit den Komponenten A, B und D auf dem Fluidmischer vorgemischt und auf dem Extruder abgemischt.

## Prüfungen:

Die Versuche zur Bestimmung der Verarbeitungsbreite wurden entsprechend den Versuchen in (4) auf einer Schneckenspritzgußmaschine Krauss-Maffei Typ KM 265-1120 durchgeführt. Die Ergebnisse sind in der Tabelle festgehalten. Die Verarbeitungsbreite wurde bei der Verarbeitungstemperatur von 240°C ermittelt. Schäden bei diesem Verarbeitungstest sind Boden- und Angußreißer sowie Schieferflecken und Schieferbrüche wie sie in (4) beschrieben sind.

Die Versuche zur Bestimmung des Entformungsverhaltens wurden auf einer Spritzgußmaschine vom Typ Stubbe SKM 76 durchgeführt. Als Spritzgußformteil wurde ein Sortierkastenunterteil mit in 2 Reihen quer gestellten scharfkantig im Steggrund endenden Stegen ausgewählt. Abmessungen der Bodenplatte: 50 x 130 x 2 mm; Zahl der quer angeordneten Stege: 20 Stück je Reihe, Steghöhe: 10 mm; Stegdicke im Steggrund: 1,8 mm. Das Formteil ist so ausgebildet, daß die Stege kernseitig liegen und sich damit im Kern fest verankern können. Zwischen jedem zweiten Steg ist ein Abstreifer angeordnet. Die Massetemperatur betrug 240°C, die Formtemperatur 30°C. Ermittelt wurde die Differenz zwischen Mindestfülldruck, d.h. dem Druck, bei dem das Formteil gerade gefüllt wurde und dem Nachdruck, bei dem beim Abstreifen des Sortierkastenunterteils vom Werkzeugkern 50 % der Formteile Risse aufweisen. Diese Differenz entspricht der in der Tabelle 1 angegebenen Entformungsbreite.

Schließlich wurde auch noch der Formbelag im Spritzgußwerkzeug nach 400 Verarbeitungscyclen im Spritzgußtest zur Bestimmung der Verarbeitungsbreite visuell beurteilt. Note 1 entspricht dabei keinem Formbelag, Note 2 bedeutet schwacher und Note 3 starker Formbelag.

**Erläuterungen zur Tabelle:**

In Spalte 2 der Tabelle sind die in den erfindungsgemäßen Formmassen enthaltenen Anteile der Komponenten A, B, C und D aufgeführt. In Spalte ist die Verarbeitungsbreite der erfindungsgemäßen Formmassen, ermittelt bei einer Verarbeitungstemperatur von 240°C, zusammen mit den unter der Rubrik "Bemerkungen" aufgeführten eventuellen Schäden an den erhaltenen Spritzgußformteilen aufgeführt. Die Spalte 4 gibt Auskunft über die bei einer Verarbeitungstemperatur von 240°C ermittelte und vorstehend näher erläuterte Entformungsbreite; in der letzten Spalte schließlich wird der beim Spritzgießen im Spritzgußwerkzeug auftretende Formbelag beurteilt.

Die Ergebnisse der Tabelle verdeutlichen in anschaulicher Weise, die für den Fachmann überraschende und aus der Addition von Einzelmaßnahmen, z. B. der Vergleichsversuche, nicht vorhersehbar außergewöhnliche Verbesserung des Entformungsverhaltens, bei gleichbleibend gutem Verarbeitungsverhalten, der erfindungsgemäßen Formmassen. So war aus den Ergebnissen der nicht erfindungsgemäßen Versuche 2 und 3 nicht zu erwarten, daß das Entformungsverhalten in einer derart drastischen Weise (vgl. Beispiel 6) verbessert werden würde.

Tabelle

| Beispiele | Komponenten (Gew.%) | | | | Verarbeitungsverhalten | | Entformungs-breite MPa (bar) | Form-belag |
|---|---|---|---|---|---|---|---|---|
| | A | B | C | D | Verarbeitungsbreite MPa (bar) | Bemerkungen | | |
| nicht erfindungsgemäß | | | | | | | | |
| 1 | AI (100) | - | - | - | 6,5 (65) | Schäden | 0 ( 0) | 1 |
| 2 | AI (99) | BI (1) | - | - | 11 (110) | keine Schäden | 1 (10) | 1 |
| 3 | AI (99,98) | - | CI (0,02) | - | 7 (70) | Schäden | 15 (150) | 1 |
| 4 | AI (99,5) | - | - | DI (0,5) | 7 (70) | Schäden | 18 (180) | 3 |
| 5 | AI (99,47) | BIII (0,5) | CI (0,03) | - | 5,5 (55) | Schäden | 7 ( 70) | 1 |
| erfindungsgemäß | | | | | | | | |
| 6 | AI (98,98) | BI (1,0) | CI (0,02) | - | 11 (110) | keine Schäden | 32 (320) | 1 |
| 7 | AI (99,47) | BI (0,5) | CI (0,03) | - | 10 (100) | keine Schäden | 30 (300) | 1 |
| 8 | AII (99,47) | BI (0,5) | CI (0,03) | - | 15 (150) | keine Schäden | 32 (320) | 1 |
| 9 | AI (98,98) | BII (1,0) | CI (0.02 ) | - | 10,5 (105) | keine Schäden | 30 (300) | 1 |
| 10 | AI (98,98) | BI (1,0) | CII (0,02) | - | 12 (120) | keine Schäden | 29 (290) | 1 |

0 127 056

Tabelle Forts.

| Beispiele | Komponenten (Gew.%) | | | | Verarbeitungsverhalten | | Entformungs-breite $MPa$ (bar) | Form-belag |
|---|---|---|---|---|---|---|---|---|
| | A | B | C | D | Verarbeitungsbreite $MPa$ (bar) | Bemerkungen | | |
| 11 | AII (99,47) | BI (0,5) | CIII (0,03) | - | 14 (140) | keine Schäden | 33 (330) | 1 |
| 12 | AI (99,18) | BI (0,5) | CI (0,02) | DI (0,4) | 15 (150) | keine Schäden | 35 (350) | 2 |
| 13 | AI (99,46) | BI (0,5) | CI (0,02) | DII (0,01) | 10 (100) | keine Schäden | 30 (300) | 1 |
| 14 | AI (95,47) | BI (0,5) | CI (0,03) | DIII (4,0) | 12 (120) | keine Schäden | 28 (280) | 1 |
| 15 | AI (99,43) | BI (0,5) | CI (0,07) | - | 10 (100) | keine Schäden | 28 (280) | 1 |

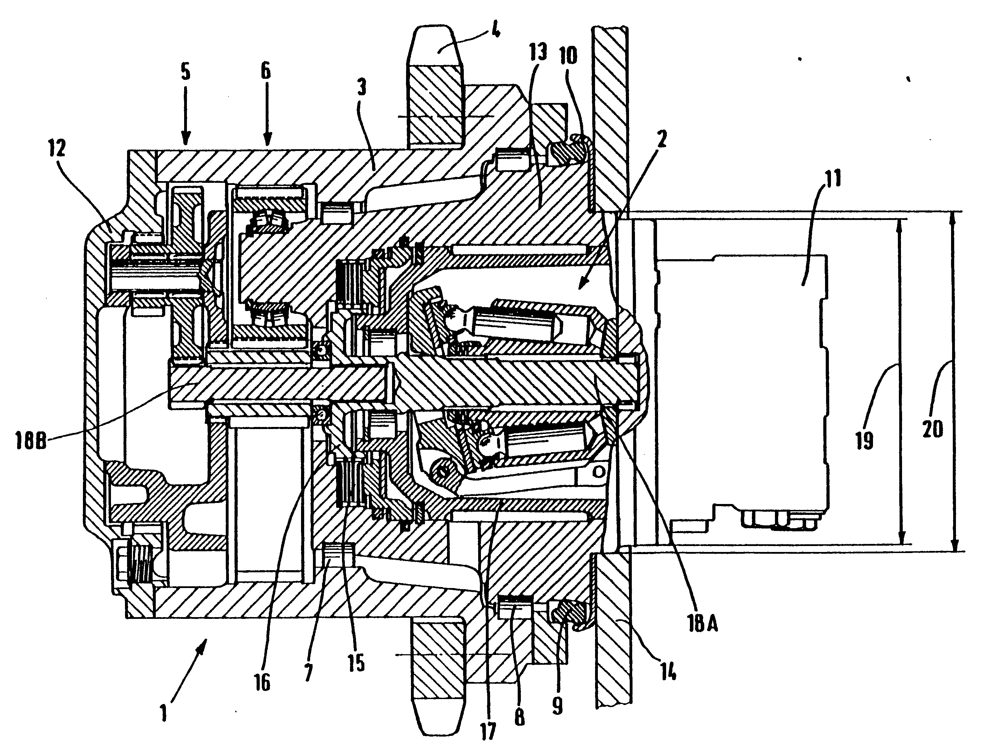

**Patentansprüche**

1. Thermoplastische Formmasse, enthaltend
A mindestens ein Styrol-Acrylnitril-Copolymerisat,
sowie
B 0,1 bis 2 Gew.%, bezogen auf A + B + C, mindestens ein lineares Dreiblockcopolymerisat, das einen

8

mittelständigen, aus Propylenoxydeinheiten aufgebauten Block und außerdem an jedem der beiden Enden je einen, aus Ethylenoxideinheiten aufgebauten Block enthält, wobei, bezogen auf das Dreiblockcopolymerisat, der Anteil des mittelständigen Blocks 95 - 80 Gew.% und der Anteil der endständigen Blöcke 5 - 20 Gew.% beträgt,

dadurch gekennzeichnet, daß die Formmasse zusätzlich als Komponente C ein Salz einer Fettsäure in einem Anteil von 0,005 bis 0,1 Gew.%, bezogen auf A + B + C, enthält.

2. Formmasse nach Anspruch 1, dadurch gekennzeichnet, daß diese ferner übliche Zusatzstoffe D enthält.

3. Formmasse nach Anspruch 1, dadurch gekennzeichnet, daß die Komponente C in einem Anteil von 0,01 bis 0,07 Gew.%, bezogen auf A + B + C, enthalten ist.

4. Formmasse nach Anspruch 1, dadurch gekennzeichnet, daß die Fettsäuren geradkettig und gesättigt sind und 12 bis 25 C-Atome aufweisen.

5. Formmasse nach Anspruch 1, dadurch gekennzeichnet, daß die Komponente C ein Salz der Metalle Zink-, Aluminium-, Magnesium-, Calcium- und Barium- oder Gemische dieser Salze von Fettsäuren mit 16 bis 25 C-atomen darstellt.

6. Verwendung von Formmassen gemäß Anspruch 1 für die Verarbeitung im Spritzguß.

7. Formteile aus Formmassen gemäß Anspruch 1.

**Claims**

1. A thermoplastic moulding composition containing
(A) at least one styrene/acrylonitril, copolymer, and
(B) from 0.1 t, 2 % by weight, based on (A)+(B)+(C), of at least one linear three-block copolymer having a middle block composed of propylene oxide units, and a block composed of ethylene oxide units at each end, the middle block being present in an amount of from 95 to 80 % by weight, and the terminal blocks in an amount of from 5 to 20 % by weight
characterized in that the moulding composition additionally contains, as component (C), a salt of a fatty acid in an amount of from 0.005 to 0.1 % by weight, based on (A)+(B)+(C).

2. A moulding composition as claimed in claim 1, characterized in that it also contains conventional additives (D).

3. A moulding composition as claimed in claim 1, characterized in that component (C) is present in an amount of from 0.01 to 0.07 % by weight, based on (A)+(B)+(C).

4. A moulding composition as claimed in claim 1, characterized in that the fatty acid is linear or branched and contains from 12 to 25 carbon atoms.

5. A moulding composition as claimed in claim 1, characterized in that component (C) is a zinc, aluminium, magnesium, calcium or barium salt of a fatty acid of 16 to 25 carbon atoms, or a mixture of such salts.

6. The use of a moulding composition as claimed in claim 1 for injection moulding.

7. Moulded articles produced from a moulding composition as claimed in claim 1.

**Revendications**

1. Matière à mouler thermoplastique, contenant:
A au moins un copolymère styrène/acrylonitrile, ainsi que
B 0,1 à 2 % en poids, par rapport à A + B + C, d'au moins un copolymère séquencé ternaire à chaîne droite qui contient, en position centrale, un bloc composé d'unités oxyde de propylène et en outre, à chacune des deux extrémités, un bloc composé d'unités oxyde d'éthylène, la part du bloc en position centrale entrant pour 95 à 80 % en poids dans la constitution du copolymère séquencé ternaire et celle des blocs d'extrémité pour 5 à 20 % en poids,
caractérisée en ce qu'elle contient en plus, en tant que composant C, un sel d'un acide gras dans une proportion de 0,005 à 0,1 % en poids par rapport à A + B + C.

2. Matière à mouler selon la revendication 1, caractérisée en ce qu'elle contient en outre des produits ajoutés D usuels.

3. Matière à mouler selon la revendication 1, caractérisée en ce que le composant C y est contenu dans une proportion de 0,01 à 0,07 % en poids par rapport à A + B + C.

4. Matière à mouler selon la revendication 1, caractérisée en ce que les acides gras sont à chaîne droite et saturés et comportent 12 à 25 atomes de C.

5. Matière à mouler selon la revendication 1, caractérisée en ce que le composant C représente un sel des métaux zinc, aluminium, magnésium, calcium et baryum ou des mélanges de ces sels avec des acides gras à 16-25 atomes de C.

6, Utilisation de matières à mouler selon la revendication 1 pour leur transformation dans le moulage par injection.

7. Pièces moulées, faites de matières à mouler selon la revendication 1.